# EUROPEAN PATENT APPLICATION

(11) **EP 4 517 922 A1**
(43) Date of publication of application: **05.03.2025**
(21) Application number: 24187558.2
(22) Date of filing: 09.07.2024
(51) Int. Cl.: H01M 10/42, H01M 10/48, H01M 10/615

(54) **BATTERY PACK AND CONTROL METHOD THEREOF, AND ENERGY STORAGE DEVICE**

(30) Priority: 27.07.2023 CN 202310940375
(71) Applicant: Huawei Digital Power Technologies Co., Ltd., Shenzhen, Guangdong 518043 (CN)
(72) Inventor: LUO, Yingjie, Shenzhen, 518043 (CN); XIAO, Guannan, Shenzhen, 518043 (CN); JIANG, Rui, Shenzhen, 518043 (CN); ZHAO, Wei, Shenzhen, 518043 (CN)
(74) Representative: Gill Jennings & Every LLP

(57) **Abstract**

This application provides a battery pack and a control method thereof, and an energy storage device. The battery pack may include a battery housing, an electrochemical cell, a power module, a controller, a first temperature sensor, and a second temperature sensor. The electrochemical cell is located inside the battery housing, and a heating film is disposed on an outer wall of the electrochemical cell. The power module is located outside the battery housing and is electrically connected to the electrochemical cell. The first temperature sensor is configured to detect temperature of the power module to obtain a first temperature value. The second temperature sensor is configured to detect temperature of the electrochemical cell to obtain a second temperature value. The heating film, the first temperature sensor, and the second temperature sensor are electrically connected to the controller. The controller may be configured to control, based on the first temperature value and the second temperature value or based on the second temperature value, the heating film to heat the electrochemical cell, to reduce a risk of condensation inside the battery pack, prevent the inside of the battery pack from being in a high-humidity environment for a long time, and improve a service life and safety of the battery pack.

## Description

### TECHNICAL FIELD

This application relates to the field of energy technologies, and in particular, to a battery pack and a control method thereof, and an energy storage device.

### BACKGROUND

With continuous development and wide application of clean energy, energy storage devices that can store electric energy are widely used in a plurality of fields. In the energy storage device, a plurality of battery packs connected in series or in parallel are usually placed in a cabinet, so that the cabinet effectively protects the battery packs. During actual use, there is a need to ensure that the battery pack is within a normal temperature range, to ensure charge and discharge performance and use safety of the battery pack. In addition, when a temperature difference between the inside and the outside of the battery pack is excessively large or humidity inside the battery pack is excessively high, an electrochemical cell or another electronic component inside the battery pack is corroded, or even a bad case such as a short circuit occurs. As a result, a service life and safety of the battery pack cannot be ensured.

### SUMMARY

This application provides a battery pack and a control method thereof, and an energy storage device, to reduce a risk of condensation inside the battery pack, and improve a service life and safety of the battery pack.

According to a first aspect, this application provides a battery pack. The battery pack may include a battery housing, an electrochemical cell, a power module, a controller, a first temperature sensor, and a second temperature sensor. Specifically, the electrochemical cell is located inside the battery housing, and the power module is located outside the battery housing. A heating film is disposed on an outer wall of the electrochemical cell. The power module is electrically connected to the electrochemical cell. The first temperature sensor is configured to detect temperature of the power module to obtain a first temperature value. The second temperature sensor is configured to detect temperature of the electrochemical cell to obtain a second temperature value. The heating film, the first temperature sensor, and the second temperature sensor are electrically connected to the controller. The controller is configured to control, based on the first temperature value and the second temperature value or based on the second temperature value, the heating film to heat the electrochemical cell.

In the battery pack, the first temperature sensor inside the battery housing and the second temperature sensor may detect the temperature of the power module and the temperature of the electrochemical cell. The controller may determine, based on the temperature of the electrochemical cell or based on the temperature of the electrochemical cell and the temperature of the power module, whether temperature of a region of the electrochemical cell is likely to cause condensation, to control, based on a determining result, the heating film to heat the electrochemical cell. This reduces a risk of condensation inside the battery pack, prevents the electrochemical cell from being in a high-humidity environment for a long time, and improves a service life and safety of the battery pack.

The battery housing may have an opening. When the power module is specifically disposed, the power module may be disposed at the opening, and the power module may form a sealed cavity with the battery housing, so that the battery pack has good sealing performance. The electrochemical cell is disposed inside the sealed cavity.

In the foregoing technical solution, a ventilation valve may be disposed on a surface that is of the battery housing and that is away from the power module, to implement circulation between internal air and external air of the battery pack.

When the ventilation valve is specifically disposed, the ventilation valve may have a unidirectional moisture-permeable film. The unidirectional moisture-permeable film may prevent external moisture from permeating into the battery housing, and when humidity inside the battery pack is higher than humidity outside the battery pack, moisture inside the battery housing may be discharged by using the unidirectional moisture-permeable film, to avoid excessive moisture inside the battery housing.

In some technical solutions, a flux of the ventilation valve may be set to be greater than or equal to 500 L/min at atmospheric pressure of 7 kPa, to implement high-flux circulation between internal air and external air of the battery pack.

In some technical solutions, the heating film may include a first heating element and a second heating element. Specifically, the first heating element is fastened to a surface that is of the electrochemical cell and that is close to the power module, and the second heating element is fastened to a surface that is of the electrochemical cell and that is away from the power module. In some other technical solutions, the heating film may include an annular heating element. The annular heating element may be disposed around a periphery of the electrochemical cell.

In some technical solutions, the power module may include a circuit board and a fan. The fan is electrically connected to the controller and is configured to dehumidify the circuit board. When an internal environment of the power module is a condensation-prone environment, condensation may also occur on the circuit board. Therefore, the controller may be further configured to control, based on the first temperature value and the second temperature value or based on the first temperature value, the fan to dehumidify the circuit board.

In some other technical solutions, the power module may further include a heat sink fastened to the circuit board, and the heat sink may be configured to dissipate heat for the circuit board. The battery pack further includes a third temperature sensor. The third temperature sensor is electrically connected to the controller and is configured to detect temperature of the heat sink to obtain a third temperature value. In this technical solution, the controller may be further configured to control, based on the first temperature value and the third temperature value or based on the first temperature value, the second temperature value, and the third temperature value, the fan to dehumidify the circuit board.

In some other technical solutions, the battery pack may further include a first humidity sensor, and the first humidity sensor is electrically connected to the controller. The first humidity sensor is configured to detect humidity of the power module to obtain a first humidity value. The controller may be further configured to control, based on the first humidity value, that is, directly based on the humidity of the power module, the fan to dehumidify the circuit board.

Certainly, the battery pack may further include a second humidity sensor, and the second humidity sensor is electrically connected to the controller. The second humidity sensor is configured to detect humidity of the electrochemical cell to obtain a second humidity value. The controller may be further configured to control, based on the second humidity value, that is, directly based on the humidity of the electrochemical cell, the heating film to heat the electrochemical cell.

In addition, the battery pack may further include a sealed enclosure. The controller may be disposed inside the sealed enclosure, to avoid impact of hot and wet air inside the battery pack on the controller, and reduce a condensation probability of the controller.

A specific position of the sealed enclosure is not limited. For example, the sealed enclosure may be located inside the battery housing, or the sealed enclosure may be located inside the power module.

According to a second aspect, this application provides an energy storage device. The energy storage device may specifically include a plurality of battery packs according to the first aspect, and these battery packs are connected in series or in parallel to output electric energy to a bus. In the energy storage device, the first temperature sensor and the second temperature sensor inside the battery pack may detect the temperature of the power module and the temperature of the electrochemical cell. The controller may determine, based on the temperature of the electrochemical cell or based on the temperature of the electrochemical cell and the temperature of the power module, whether temperature of a region of the electrochemical cell is likely to cause condensation, to control, based on a determining result, the heating film to heat the electrochemical cell. This reduces a risk of condensation inside the battery pack, prevents the inside of the battery pack from being in a high-humidity environment for a long time, and improves a service life and safety of the battery pack in the energy storage device.

According to a third aspect, this application provides a control method thereof. The control method may specifically include:
controlling a first temperature sensor to detect temperature of a power module to obtain a first temperature value, and controlling a second temperature sensor to detect temperature of an electrochemical cell to obtain a second temperature value; and
controlling, based on the first temperature value and the second temperature value or based on the second temperature value, a heating film to heat the electrochemical cell.

In the control method, the first temperature sensor and the second temperature sensor inside the battery pack may detect the temperature of the power module and the temperature of the electrochemical cell. In the method, whether temperature of a region of the electrochemical cell is likely to cause condensation may be determined based on the temperature of the electrochemical cell or based on the temperature of the electrochemical cell and the temperature of the power module, to control, based on a determining result, the heating film to heat the electrochemical cell. This reduces a risk of condensation inside the battery pack, prevents the inside of the battery pack from being in a high-humidity environment for a long time, and improves a service life and safety of the battery pack in an energy storage device.

The controlling, based on the first temperature value and the second temperature value or based on the second temperature value, a heating film to heat the electrochemical cell may specifically include:
controlling the heating film to heat the electrochemical cell when at least one of the following conditions is satisfied:
the second temperature value is less than a specified temperature value; or
the first temperature value is greater than the second temperature value, and a difference between the first temperature value and the second temperature value is greater than a first temperature difference.

In addition, the control method may further include:
controlling the heating film to heat the electrochemical cell when at least one of the following conditions is satisfied:
continuous operation time of the electrochemical cell is less than specified operation time; or
the electrochemical cell is powered on for the first time.

Generally, in an operating process of the electrochemical cell, both the region of the electrochemical cell and a region of the power module generate heat, so that condensation is not likely to occur. Therefore, condensation is not likely to occur in a battery pack whose operation time exceeds the specified operation time. In addition, before the electrochemical cell is powered on for the first time, there may be an unknown moisture permeating case in an installation environment or in a transportation process of the battery pack. Therefore, before the electrochemical cell is powered on for the first time, the heating film may be controlled to heat the electrochemical cell.

In addition, when an internal environment of the power module is a condensation-prone environment, condensation may also occur on a circuit board. Therefore, in some technical solutions, the control method may further include:
controlling, based on the first temperature value and the second temperature value or based on the first temperature value, a fan to dehumidify the circuit board.

Specifically, when the first temperature value is greater than the second temperature value, and the difference between the first temperature value and the second temperature value is within a second specified difference interval, the fan may be controlled to dehumidify the circuit board.

In addition, the fan may be controlled to dehumidify the circuit board when at least one of the following conditions is satisfied:
the continuous operation time of the electrochemical cell is less than the specified operation time; or
the electrochemical cell is powered on for the first time.

In some other technical solutions, the power module may further include a heat sink fastened to the circuit board, and the heat sink is configured to dissipate heat for a heat generation component on the circuit board. In the technical solution, the control method may further include:
controlling a third temperature sensor to detect temperature of the heat sink to obtain a third temperature value; and
controlling, based on the first temperature value and the third temperature value or based on the first temperature value, the second temperature value, and the third temperature value, the fan to dehumidify the circuit board.

Specifically, the control method may include:
controlling the fan to dehumidify the circuit board when at least one of the following conditions is satisfied:
the first temperature value is less than the second temperature value, the first temperature value is greater than the third temperature value, and a difference between the first temperature value and the second temperature value is greater than a third temperature difference; or
the third temperature value is greater than the first temperature value, and a difference between the third temperature value and the first temperature value is greater than a fourth temperature difference.

In some other technical solutions, the battery pack may further include a first humidity sensor. The first humidity sensor may be configured to detect humidity of the power module to obtain a first humidity value. The control method may further include:
controlling the first humidity sensor to detect humidity of the power module to obtain a first humidity value; and
controlling, based on the first humidity value, the fan to dehumidify the circuit board.

Additionally/Alternatively, the battery pack may further include a second humidity sensor, and the second humidity sensor may be configured to detect humidity of the electrochemical cell to obtain a second humidity value. The control method may further include:
controlling the second humidity sensor to detect humidity of the electrochemical cell to obtain a second humidity value; and
controlling, based on the second humidity value, the heating film to heat the electrochemical cell.

### BRIEF DESCRIPTION OF DRAWINGS

FIG. 1 is a diagram of a battery pack according to an embodiment of this application;
FIG. 2 is an exploded view of the battery pack in FIG. 1;
FIG. 3 is a diagram of an energy storage device according to an embodiment of this application;
FIG. 4 is a block diagram of a battery pack according to an embodiment of this application;
FIG. 5 is a diagram of a moisture ingress rate test according to an embodiment of this application;
FIG. 6 is another diagram of a battery pack according to an embodiment of this application;
FIG. 7 is another diagram of a battery pack according to an embodiment of this application;
FIG. 8 is another diagram of a battery pack according to an embodiment of this application; and
FIG. 9 is a flowchart of a control method thereof according to an embodiment of this application.

### Reference numerals:

01: cup body;
02: cup cover;
04: calcium chloride;
03: ventilation valve for testing;
10: battery pack;
11: battery housing;
12: electrochemical cell;
13: power module;
14: ventilation valve;
15: heating film;
17: circuit board;
18: fan;
19: sealed enclosure;
20: energy storage device;
21: box;
131: controller;
161: first temperature sensor;
162: second temperature sensor.

### DESCRIPTION OF EMBODIMENTS

To make objectives, technical solutions, and advantages of this application clearer, the following further describes this application in detail with reference to accompanying drawings.

It should be noted that terms used in the following embodiments are merely intended to describe specific embodiments, but are not intended to limit this application. The singular forms "one", "a", "the", "the foregoing", "this", and "the one" used in this specification and the appended claims of this application are also intended to include forms such as "one or more", unless otherwise specified in the context clearly.

Reference to "an embodiment", "some embodiments", or the like described in this specification means that one or more embodiments of this application include a specific feature, structure, or characteristic described with reference to the embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

For ease of understanding of a battery pack provided in embodiments of this application, the following describes an application scenario of the battery pack.

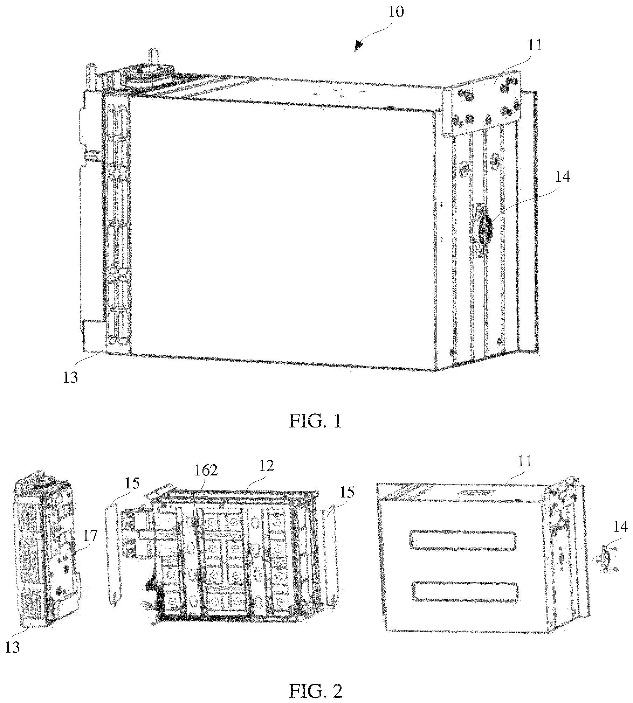

FIG. 1 is a diagram of a battery pack according to an embodiment of this application. FIG. 2 is an exploded view of the battery pack in FIG. 1. As shown in FIG. 1 and FIG. 2, a battery pack 10 may specifically include a battery housing 11, an electrochemical cell 12, a power module 13, and a controller (not shown in the figure). The electrochemical cell 12 is disposed inside the battery housing 11, and the power module 13 is disposed outside the battery housing 11 and is electrically connected to the electrochemical cell 12. Generally, to prevent an electronic component inside the battery pack 10 from being exposed to the sun or rain, the battery housing 11 may be a housing with good sealing performance. For example, a waterproof level of the battery housing 11 may be an IPX5 level or a level above IPX5. The battery pack 10 provided in this embodiment of this application may be used as an energy storage battery or a power battery. Specifically, the battery pack 10 may be used in scenarios such as home energy storage, industrial energy storage, a data center, a power station, and vehicle charging, and is configured to store and release electric energy. For example, in some embodiments, the battery pack 10 may be directly used as a power battery in a new energy vehicle. During specific application, the battery pack 10 may be connected to an electric drive system of a vehicle, and is configured to provide electric energy for the electric drive system. In some other embodiments, the battery pack 10 may be used in an energy storage device 20 for industrial energy storage, and is used as an energy storage battery. Specifically, the energy storage device 20 may include a plurality of battery packs 10, and these battery packs 10 may be connected in series or in parallel to output electric energy to a bus.

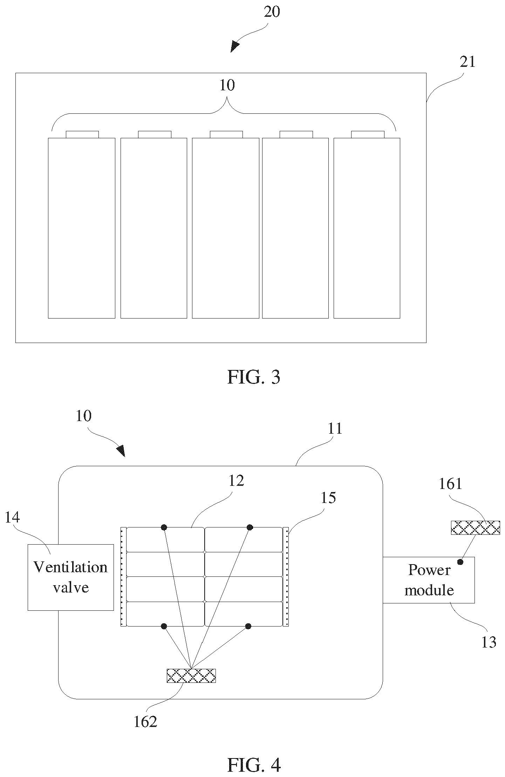

The foregoing energy storage device 20 for industrial energy storage is used as an example. FIG. 3 is a diagram of an energy storage device according to an embodiment of this application. As shown in FIG. 3, the energy storage device 20 may specifically include a box 21 and a plurality of battery packs 10 disposed inside the box 21. The box 21 can provide sufficient accommodation space for the battery packs 10, and can prevent the battery packs 10 from being affected by sunlight, rain, and the like, to improve safety and service lives of the battery packs 10. In addition, the battery packs 10 are disposed inside the box 21, which helps improve convenience for disposing the energy storage device. During actual application, the box 21 may be disposed at a required installation position according to an actual disposing requirement.

For a battery pack that has a battery housing with a high waterproof level (IPX5 or above), the battery housing can effectively avoid exchange of high-humidity gas, and a risk of condensation inside the battery pack is low in a short time. However, during actual application, temperature and humidity inside the battery pack may be high due to good sealing performance of the battery housing. If the battery pack is in a high-humidity and temperature-changing environment for a long time during operating, the battery housing undergoes water absorption effect and breathing effect because a material of the battery housing has small gaps. As a result, ambient humidity inside the battery pack gradually increases, and condensation is likely to occur. In addition, because heat capacity of an electrochemical cell differs greatly from heat capacity of other structure members, and a temperature rise rate of the electrochemical cell is lower, a cold region and condensation are likely to occur in a region of the electrochemical cell. When temperature of some components (for example, the electrochemical cell or a circuit board) inside the battery housing is lower than temperature of ambient air inside the battery housing, moisture in the ambient air inside the battery housing may condense on a surface of the component to form condensation. When condensation is formed on an outer surface of the electrochemical cell, the condensation corrodes the electrochemical cell, or even causes a bad case such as a short circuit, affecting safety and a service life of the battery pack. In addition, when condensation is formed on an inner wall of the battery housing, the condensation corrodes the battery housing, reducing structure strength and reliability of the battery housing. This is not conducive to safety of the battery pack.

It should be noted that the breathing effect means that in a process in which ambient temperature changes, when temperature inside a sealed cavity increases, gas flows out; and when the temperature inside the sealed cavity decreases, gas is inhaled. When the sealed cavity undergoes the breathing effect, the sealed cavity may absorb liquid near a gap or a hole of the housing in addition to the atmosphere. Especially when a rainstorm occurs in high-temperature weather, rainwater covers the gap or the hole, and the sealed cavity undergoes the water absorption effect. Once a large quantity of liquid is inhaled, it is very difficult to discharge the liquid through breathing. Such water absorption effect causes a large quantity of water to accumulate in the sealed cavity within a short time, resulting in a high-humidity environment inside the battery pack.

In some current energy storage devices, a dehumidification apparatus is usually disposed in a box, and the dehumidification apparatus is connected to the inside of a battery pack through a ventilation pipe, to reduce humidity inside the battery pack. However, such arrangement is not conducive to long-term use and increases frequency of maintenance of the energy storage device by staff. In addition, for an energy storage device disposed at a remote place, such arrangement greatly increases maintenance difficulty and maintenance time.

Therefore, this application provides a battery pack and a control method thereof, and an energy storage device, to reduce a risk of condensation inside the battery pack, and improve a service life and safety of the battery pack.

FIG. 4 is a block diagram of a battery pack according to an embodiment of this application. As shown in FIG. 4, a battery pack 10 may include a first temperature sensor 161 and a second temperature sensor 162. The first temperature sensor 161 is configured to detect temperature of a power module 13 to obtain a first temperature value. Based on a heat generation state of the power module 13 during operating, the first temperature sensor 161 may be specifically fastened to the power module 13. Specifically, the first temperature sensor 161 may be disposed on a surface of the power module 13, or may be disposed inside the power module 13. The second temperature sensor 162 is configured to detect temperature of an electrochemical cell 12 to obtain a second temperature value. A heating film 15 is disposed on an outer wall of the electrochemical cell 12. The electrochemical cell 12 may include a plurality of electrochemical cell bodies, and these electrochemical cell bodies may be arranged in an array. Specifically, the second temperature sensor 162 may be disposed on outer surfaces of the plurality of electrochemical cell bodies, or may be disposed between two adjacent electrochemical cell bodies. The heating film 15, the first temperature sensor 161, and the second temperature sensor 162 may be electrically connected to a controller. The controller is configured to control, based on the first temperature value and the second temperature value or based on the second temperature value, the heating film 15 to heat the electrochemical cell 12.

When a waterproof level of a battery housing 11 is high, humidity inside the battery pack 10 does not suddenly change due to a low moisture ingress rate. In other words, for the battery pack 10 with a high waterproof level, a high-humidity environment inside the battery housing 11 is usually caused by long-term moisture ingress, and a temperature change is a main cause of condensation inside the battery pack 10. Therefore, in the battery pack 10 in this application, the first temperature sensor 161 inside the battery housing 11 and the second temperature sensor 162 are configured to detect the temperature of the power module 13 and the temperature of the electrochemical cell 12. Because the power module 13 is located outside the battery housing 11, the temperature of the power module 13 may be used as ambient temperature. The controller may determine, based on the temperature of the electrochemical cell 12 or based on the temperature of the electrochemical cell 12 and the temperature of the power module 13, whether condensation is likely to occur in a region of the electrochemical cell 12, to control, based on a determining result, the heating film 15 to heat the electrochemical cell 12. This reduces a risk of condensation inside the battery pack 10, prevents the electrochemical cell 12 from being in a high-humidity environment for a long time, implements condensation risk monitoring and dehumidification for the battery pack 10, and improves a service life and safety of the battery pack 10. The controller may be set to obtain the first temperature value and the second temperature value periodically, or may be set to obtain the first temperature value and the second temperature value in real time.

As shown in FIG. 2, in some embodiments, the battery housing 11 may have an opening. When the power module 13 is specifically disposed, the power module 13 may be disposed at the opening, and the power module 13 may form a sealed cavity with the battery housing 11, so that the battery pack 10 has good sealing performance. The electrochemical cell 12 is disposed inside the sealed cavity.

To connect internal air and external air of the battery pack 10 to equalize internal and external atmospheric pressure of the battery pack 10, a ventilation valve 14 may be disposed on a surface that is of the battery housing 11 and that is away from the power module 13. The electrochemical cell 12 is located inside the battery housing 11 and is close to the ventilation valve 14.

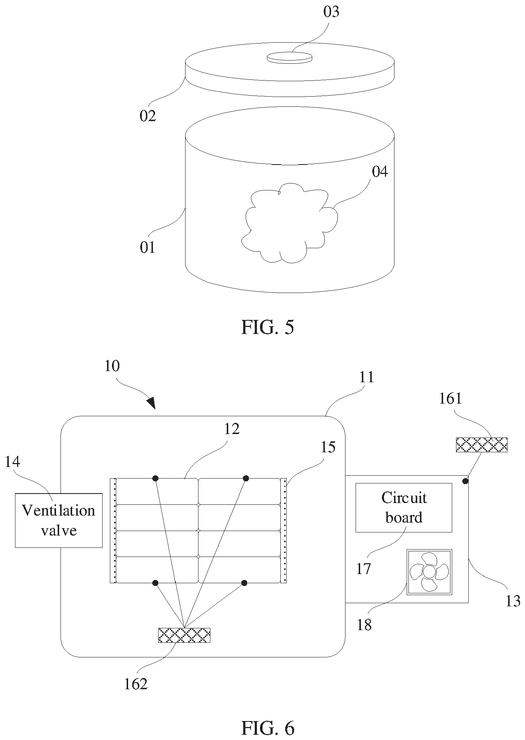

When the ventilation valve 14 is specifically disposed, a high-flux valve may be selected for the ventilation valve 14. FIG. 5 is a diagram of a moisture ingress rate test according to an embodiment of this application. As shown in FIG. 5, in this application, a moisture-permeable cup is used to perform a moisture ingress rate test on different ventilation valves. The moisture-permeable cup includes a cup body 01 and a cup cover 02. The cup body 01 has a capacity of 300 milliliters, and contains approximately 35 grams of calcium chloride 04. The cup cover 02 is provided with an installation structure member, and a ventilation valve 03 for testing is fastened to the cup cover 02 by using the installation structure member. Before the test, an initial weight of the calcium chloride 04 is WO. In the test, test conditions are as follows: Temperature: 40°C±2°C; Relative humidity: 95%±2%; Duration h: 8 hours or 12 hours. After the test is completed, a weight of calcium chloride 04 after moisture absorption is W1. According to a formula for calculating a moisture ingress rate, the moisture ingress rate is (W1-WO)/h. After a moisture ingress rate test is performed on a first group of ventilation valves with a same breathable film area and different fluxes and a second group of ventilation valves with a same flux and different breathable film areas separately, impact of different fluxes and different breathable film areas on a moisture ingress rate can be figured out. It can be learned from a plurality of tests that, in a case of a same breathable film area, different fluxes of the ventilation valves have little impact on the moisture ingress rate, and in a case of a same flux, different breathable film areas of the ventilation valves have great impact on the moisture ingress rate, that is, the larger the breathable film area is, the higher the moisture ingress rate is. Therefore, in this application, a ventilation valve 14 with a high flux and a small breathable film area is used, to implement high-flux circulation between internal air and external air of the battery pack 10, thereby equalizing internal and external atmospheric pressure rapidly, suppressing breathing effect and water absorption effect, and reducing impact of moisture ingress caused by the ventilation valve 14. Therefore, the ventilation valve 14 equalizes internal and external atmospheric pressure of the battery housing 11, to reduce breathing effect and water absorption effect of the battery housing 11.

In some optional embodiments, a flux of the ventilation valve 14 may be greater than or equal to 500 L/min at atmospheric pressure of 7 kPa. For example, the flux may be specifically 500 L/min, 600 L/min, 850 L/min, 987 L/min, 1000 L/min, 1200 L/min, 1380 L/min, 1400 L/min, or the like, which is not further enumerated herein.

In some embodiments, the ventilation valve 14 may have a unidirectional moisture-permeable film. The unidirectional moisture-permeable film may further prevent external moisture from permeating into the battery housing 11, and when humidity inside the battery pack 10 is higher than humidity outside the battery pack 10, moisture inside the battery housing 11 may be discharged by using the unidirectional moisture-permeable film, to avoid excessive moisture inside the battery housing 11.

In the foregoing embodiment, the heating film 15 may be disposed on the outer wall of the electrochemical cell 12, and may be in close contact with the electrochemical cell 12, to implement a function of heating the electrochemical cell 12. In this application, at least one surface of the outer wall of the electrochemical cell 12 is provided with the heating film 15. As shown in FIG. 2, in some embodiments, a sheet-like heating film 15 may be disposed at one end that is of the electrochemical cell 12 and that is close to the ventilation valve 14 and at one end that is of the electrochemical cell 12 and that is close to the power module 13. In some other embodiments, an annular heating film 15 may be disposed on a periphery of the electrochemical cell 12. During application, because there is a high-humidity environment inside the battery pack 10, when a difference between temperature of the electrochemical cell 12 and ambient temperature is large, condensation is likely to occur on a surface of the electrochemical cell 12. For example, when temperature of a lithium battery increases in the morning, because heat capacity of the electrochemical cell 12 is large, a temperature rise rate of the electrochemical cell 12 is lower than a temperature rise rate of ambient air inside the battery pack 10. In this case, surface temperature of the electrochemical cell 12 is likely to be lower than a dew point of the ambient air inside the battery pack 10. In this case, the controller may control the heating film 15 to be turned on, and heat the electrochemical cell 12, to eliminate this temperature difference. In addition, temperature of a condensation-prone region of the electrochemical cell 12 increases rapidly, and overall temperature inside the battery pack 10 increases accordingly, so that a condensation risk can be reduced.

FIG. 6 is another diagram of a battery pack according to an embodiment of this application. As shown in FIG. 6, in some embodiments, the power module 13 may specifically include a circuit board 17 and a fan 18. When an internal environment of the power module 13 is a condensation-prone environment, because a temperature change occurs when some components on the circuit board 17 generate heat during operating, condensation may also occur on the circuit board 17. To dehumidify the circuit board 17, the fan 18 is electrically connected to the controller and is configured to dehumidify the circuit board 17. The controller may be configured to control, based on the first temperature value and the second temperature value or based on the first temperature value, the fan 18 to dehumidify the circuit board 17. In addition, to increase a dehumidification rate, an air exhaust direction of the fan 18 may be parallel to the circuit board 17.

In some other embodiments, the power module 13 may further include a heat sink. The heat sink is disposed on the circuit board 17 and is configured to dissipate heat for a heat generation component on the circuit board 17. The battery pack 10 may further include a third temperature sensor electrically connected to the controller, and the third temperature sensor may be configured to detect temperature of the heat sink to obtain a third temperature value. In this embodiment, the temperature of the heat sink may also be used as temperature of the circuit board 17. The controller is further configured to control, based on the first temperature value and the third temperature value or based on the first temperature value, the second temperature value, and the third temperature value, the fan 18 to dehumidify the circuit board 17.

In some other embodiments, the battery pack 10 may further include a first humidity sensor. The first humidity sensor is disposed on a surface of the power module 13 or disposed inside the power module 13, and is electrically connected to the controller. The first humidity sensor is configured to detect humidity of the power module 13 to obtain a first humidity value. The controller may be further configured to control, based on the first humidity value, that is, directly based on the humidity of the power module 13, the fan 18 to dehumidify the circuit board 17. Certainly, the battery pack 10 may further include a second humidity sensor. The second humidity sensor is disposed on the electrochemical cell 12 and is electrically connected to the controller. The second humidity sensor is configured to detect humidity of the electrochemical cell 12 to obtain a second humidity value. The controller may be further configured to control, based on the second humidity value, that is, directly based on the humidity of the electrochemical cell 12, the heating film 15 to heat the electrochemical cell 12.

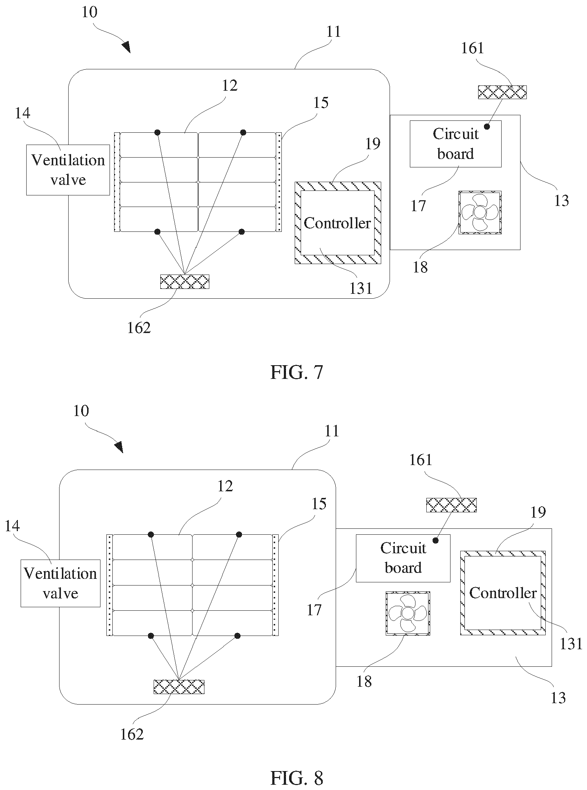

FIG. 7 is another diagram of a battery pack according to an embodiment of this application. FIG. 8 is another diagram of a battery pack according to an embodiment of this application. As shown in FIG. 7 and FIG. 8, the battery pack 10 may further include a sealed enclosure 19. The controller 131 may be disposed inside the sealed enclosure 19, to avoid impact of hot and wet air inside the battery pack 10 on the controller 131, and reduce a condensation probability of the controller 131. A position relationship between the sealed enclosure 19 and the battery housing 11 is not limited. For example, as shown in FIG. 7, the sealed enclosure 19 may be located inside the battery housing 11. Alternatively, as shown in FIG. 8, the sealed enclosure 19 may be located outside the battery housing 11. In this case, the sealed enclosure 19 may be disposed independently of the power module 13 and is in fixed connection to the battery housing 11, or may be disposed inside the power module 13.

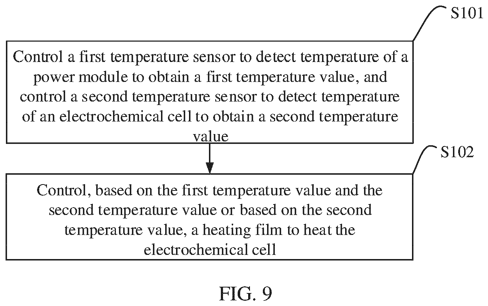

Based on a same design concept, this application provides a method for controlling the foregoing battery pack 10. The controller 131 of the battery pack 10 is configured to perform the control method. FIG. 9 is a flowchart of a method for controlling a battery pack according to an embodiment of this application. As shown in FIG. 9, the control method may specifically include the following steps.

Step S101: Control a first temperature sensor to detect temperature of a power module to obtain a first temperature value, and control a second temperature sensor to detect temperature of an electrochemical cell to obtain a second temperature value.

Step S102: Control, based on the first temperature value and the second temperature value or based on the second temperature value, a heating film to heat the electrochemical cell.

In the foregoing control method, the first temperature sensor 161 and the second temperature sensor 162 inside the battery pack 10 may detect the temperature of the power module 13 and the temperature of the electrochemical cell 12. According to the control method, whether condensation is likely to occur in a region of the electrochemical cell 12 may be determined based on the temperature of the electrochemical cell 12 or based on the temperature of the electrochemical cell 12 and the temperature of the power module 13, to control, based on a determining result, the heating film 15 to heat the electrochemical cell 12. This reduces a risk of condensation inside the battery pack 10, prevents the inside of the battery pack 10 from being in a high-humidity environment for a long time, and improves a service life and safety of the battery pack 10 in an energy storage device 20.

Specifically, when a controller performs the control method, a condition for controlling the heating film 15 to heat the electrochemical cell 12 may be at least one of the following conditions.

The second temperature value is less than a specified temperature value.

In a natural environment, humidity dynamically changes. When humidity inside a battery housing 11 is higher than humidity outside the battery housing 11, the battery housing 11 is in a moisture ingress state, and when the humidity inside the battery housing 11 is lower than the humidity outside the battery housing 11, the battery housing 11 is in a moisture egress state. In a dynamic adjustment process, humidity of a cavity inside the battery housing 11 gradually tends to balanced humidity of an environment in which the battery housing 11 is located. Therefore, during actual application, temperature at which condensation occurs may be determined based on balanced humidity of an application environment and a first temperature difference a°C between the region of the electrochemical cell 12 and a region of the power module 13.

A high-temperature and high-humidity test (refer to a GB/T 2423.4 temperature and humidity test standard) may be performed on the battery pack 10 in this application at different temperature change rates, to collect temperature of different regions. Through the test, a temperature change rate at which condensation starts to occur, and a temperature difference between the region of the electrochemical cell 12 and the region of the power module 13 of the battery pack 10 at the temperature change rate may be identified, and it may be identified that when a rapid temperature change that causes the temperature difference occurs, condensation is likely to occur, and the controller may start a dehumidification measure. It is assumed that the balanced humidity is 60%, the first temperature difference is 8°C, and dew point temperature is 12°C. In this case, corresponding temperature is 20°C. This indicates that in a scenario in which temperature is higher than 20°C, there is a low probability that the region of the electrochemical cell 12 satisfies a condensation condition. Therefore, in this environment, the specified temperature value may be set to 20°C, so that a temperature change in a high-temperature environment may be not considered. The controller may receive the temperature of the electrochemical cell 12, and determine whether the temperature of the electrochemical cell 12 is lower than the specified temperature value. If the temperature of the electrochemical cell 12 is lower than the specified temperature value, the heating film 15 may be controlled to heat the electrochemical cell 12.

Alternatively, the first temperature value is greater than the second temperature value, and a difference between the first temperature value and the second temperature value is greater than the first temperature difference.

When temperature of an external environment of the battery pack 10 changes, a temperature change rate of the region of the electrochemical cell 12 is lower than a temperature change rate of the region of the power module 13, and a cold region is likely to form in the region of the electrochemical cell 12. In this case, temperature of the region of the electrochemical cell 12 is lower than a dew point of ambient air inside the battery pack 10. It is learned through a large quantity of tests that the first temperature difference a°C between the region of the electrochemical cell 12 and the region of the power module 13 of the battery pack 10 may be within an interval of [3, 10]. For example, a may be 3, 3.5, 4.5, 5, 7, 8.4, 8.9, 9.2, 9.6, 10, or the like, which is not further enumerated herein. Specifically, in a scenario in which the difference between the first temperature value and the second temperature value is less than the first temperature difference a°C, condensation is not likely to occur in the battery pack 10, that is, condensation is not likely to occur in the region of the electrochemical cell 12.

Certainly, when the battery pack 10 is used in the energy storage device 20, in addition to the temperature of the electrochemical cell 12 and the temperature of the power module 13, the heating film 15 may be controlled, based on another condition, to heat the electrochemical cell 12. For example, in some embodiments, the control method may further include:
controlling the heating film 15 to heat the electrochemical cell 12 when at least one of the following conditions is satisfied.

Continuous operation time of the electrochemical cell is less than specified operation time.

Generally, in an operating process of the electrochemical cell 12, both the region of the electrochemical cell 12 and the region of the power module 13 generate heat, so that condensation is not likely to occur. Therefore, condensation is not likely to occur in the battery pack 10 whose operation time exceeds the specified operation time, and the electrochemical cell 12 whose operation time exceeds the specified operation time may be set to a state in which condensation is not likely to occur. The specified operation time may be set to 12 hours, 14 hours, 17 hours, 20 hours, 24 hours, 29 hours, or the like. The specified operation time may be set based on day/night temperature and humidity in an actual application environment, and operation time of the battery pack 10.

Alternatively, the electrochemical cell 12 is powered on for the first time.

When the electrochemical cell 12 is powered on for the first time, there may be an unknown moisture permeating case in an installation environment or in a transportation process of the battery pack 10. Therefore, when the electrochemical cell 12 is powered on for the first time, the controller may control the heating film 15 to heat the electrochemical cell 12, to reduce a problem of condensation inside the battery pack.

In some embodiments, the controller may determine whether at least one of the foregoing four conditions is satisfied. The four conditions are as follows:
the second temperature value is less than the specified temperature value;
the first temperature value is greater than the second temperature value, and the difference between the first temperature value and the second temperature value is greater than the first temperature difference;
the continuous operation time of the electrochemical cell is less than the specified operation time; or
the electrochemical cell 12 is powered on for the first time.

Specifically, the controller may determine whether one of the four conditions is satisfied, any two of the four conditions are satisfied, any three of the four conditions are satisfied, or all the four conditions are satisfied. In a specific embodiment, when the battery pack 10 operates normally, the controller may control the heating film 15 to be turned on only when the controller determines that all the four conditions are satisfied. In this way, heating costs can be reduced.

When the power module 13 further includes a circuit board 17 and a fan 18, condensation may also occur on the circuit board 17 in a high-humidity environment inside the power module 13. Therefore, in this embodiment, the control method may further include the following step.

Step S201: Control, based on the first temperature value and the second temperature value or based on the first temperature value, the fan to dehumidify the circuit board.

Specifically, when the first temperature value is greater than the second temperature value, and the difference between the first temperature value and the second temperature value is greater than a second temperature difference, the controller controls the fan 18 to dehumidify the circuit board 17. The controller may compare a temperature difference between the electrochemical cell 12 and the power module 13. At a temperature change rate at which condensation occurs, the second temperature difference between the region of the electrochemical cell 12 and the region of the power module 13 of the battery pack 10 is b°C. It is learned through a large quantity of tests that the second temperature difference may be within an interval of [3, 10]. For example, b may be 3, 3.4, 4.0, 4.3, 5.7, 7.6, 8.1, 8.9, 9, 9.5, 10, or the like, which is not further enumerated herein. In another scenario in which the difference between the first temperature value and the second temperature value is less than the second temperature value difference b°C, condensation is not likely to occur in the battery pack 10, and condensation is also not likely to occur in the region of the power module 13.

In addition, in the foregoing process, the controller may further detect whether there is a signal that the heating film 15 is turned on. After the heating film 15 is turned on, temperature of a condensation-prone region of the electrochemical cell 12 increases rapidly, and overall temperature of the battery increases accordingly, so that temperature of a region of the circuit board 17 also increases. In this case, the fan 18 may not be turned on.

In addition, the controller may further control the fan 18 to dehumidify the circuit board 17 when at least one of the following conditions is satisfied:
the continuous operation time of the electrochemical cell is less than the specified operation time; or
the electrochemical cell is powered on for the first time.

Generally, in an operating process of the electrochemical cell 12, both the region of the electrochemical cell 12 and the region of the power module 13 generate heat, so that condensation is not likely to occur. Therefore, condensation is not likely to occur in the battery pack 10 whose operation time exceeds the specified operation time, and this case may be not considered. The specified operation time may be set to 12 hours, 14 hours, 17 hours, 20 hours, 24 hours, 29 hours, or the like. The specified operation time may be set based on day/night temperature and humidity in an actual application environment, and operation time of the battery pack 10.

In addition, when the electrochemical cell 12 is powered on for the first time, there may be an unknown moisture permeating case in an installation environment or in a transportation process of the battery pack 10. Therefore, when the electrochemical cell 12 is powered on for the first time, the controller may control the fan 18 to dehumidify the circuit board 17. Time in which the fan 18 dehumidifies the circuit board 17 is not specifically limited. For example, the dehumidification time may be 20 minutes, 26 minutes, 30 minutes, 40 minutes, or the like.

In this embodiment, the controller may determine whether at least one of the foregoing three conditions is satisfied. The three conditions are as follows:
the first temperature value is greater than the second temperature value, and the difference between the first temperature value and the second temperature value is greater than the second temperature difference;
the continuous operation time of the electrochemical cell is less than the specified operation time; or
the electrochemical cell is powered on for the first time.

Specifically, one of the three conditions may be satisfied, or any two of the three conditions may be satisfied, or all the three conditions may be satisfied.

When the power module 13 further includes a heat sink, and the battery pack 10 further includes a third temperature sensor, the control method may further include the following step.

Step S301: Control, based on the first temperature value and a third temperature value or based on the first temperature value, the second temperature value, and the third temperature value, the fan to dehumidify the circuit board.

Specifically, the fan 18 may be controlled to dehumidify the circuit board 17 when at least one of the following conditions is satisfied.

The first temperature value is less than the second temperature value, the first temperature value is greater than the third temperature value, and a difference between the first temperature value and the second temperature value is greater than a third temperature difference.

When temperature of the region of the power module 13 is less than temperature of the region of the electrochemical cell 12, and the temperature of the region of the power module 13 is greater than temperature of the heat sink, it may be considered that ambient temperature decreases rapidly in this case. In this process, the third temperature difference between the region of the electrochemical cell 12 and the region of the power module 13 is c°C. It is learned through a large quantity of tests that the third temperature difference may be within an interval of [3, 10]. For example, c may be 3, 3.2, 4, 5.5, 6.7, 7.6, 8, 8.4, 9.1, 9.9, 10, or the like, which is not further enumerated herein. When the difference between the first temperature value and the second temperature value is greater than the third temperature difference, the fan 18 may be turned on to dehumidify the circuit board 17.

Alternatively, the third temperature value is greater than the first temperature value, and a difference between the third temperature value and the first temperature value is greater than a fourth temperature difference.

When the temperature of the heat sink is greater than temperature of a region of the circuit board 17, there may be a fourth temperature difference d°C between the region of the circuit board 17 and a region of the heat sink. It is learned through a large quantity of tests that the fourth temperature difference may be within an interval of [3, 10]. For example, d may be 3, 3.1, 4.8, 5.3, 7.4, 8.6, 8.7, 9, 9.2, 10, or the like, which is not further enumerated herein. When the difference between the third temperature value and the first temperature value is less than the fourth temperature difference, the region of the heat sink is a condensation-prone region, and the controller may control the fan 18 to be turned on.

In this embodiment, the controller may determine whether at least one of the foregoing two conditions is satisfied. Specifically, only one of the two conditions may be satisfied, or both conditions may be satisfied.

In a specific embodiment, the fan 18 may be controlled to dehumidify the circuit board 17 when all the following five conditions are satisfied:
the first temperature value is greater than the second temperature value, and the difference between the first temperature value and the second temperature value is greater than the second temperature difference;
the continuous operation time of the electrochemical cell is less than the specified operation time;
the electrochemical cell is powered on for the first time;
the first temperature value is less than the second temperature value, the first temperature value is greater than the third temperature value, and the difference between the first temperature value and the second temperature value is greater than the third temperature difference; or
the third temperature value is greater than the first temperature value, and the difference between the third temperature value and the first temperature value is greater than the fourth temperature difference.

In some other embodiments, when the battery pack 10 further includes a first humidity sensor, the first humidity sensor may directly detect humidity of the power module 13 to obtain a first humidity value. The control method may further include the following steps.

Step S401: Control the first humidity sensor to detect humidity of the power module 13 to obtain a first humidity value.

Step S402: Control, based on the first humidity value, the fan to dehumidify the circuit board.

In some other embodiments, when the battery pack 10 further includes a second humidity sensor, the second humidity sensor may directly detect humidity of the electrochemical cell 12 to obtain a second humidity value. The control method may further include the following steps.

Step S501: Control the second humidity sensor to detect humidity of the electrochemical cell to obtain a second humidity value.

Step S502: Control, based on the second humidity value, the heating film to heat the electrochemical cell.

Terms used in the foregoing embodiments are merely intended to describe specific embodiments, but are not intended to limit this application. The singular forms "one", "a", "the", "the foregoing", "this", and "the one" used in this specification and the appended claims of this application are also intended to include forms such as "one or more", unless otherwise specified in the context clearly.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A battery pack, wherein the battery pack comprises a battery housing, an electrochemical cell, a power module, a controller, a first temperature sensor, and a second temperature sensor, wherein
the electrochemical cell is located inside the battery housing, and a heating film is disposed on an outer wall of the electrochemical cell;
the power module is located outside the battery housing and is electrically connected to the electrochemical cell; the first temperature sensor is configured to detect temperature of the power module to obtain a first temperature value, and the second temperature sensor is configured to detect temperature of the electrochemical cell to obtain a second temperature value; and
the heating film, the first temperature sensor, and the second temperature sensor are electrically connected to the controller, and the controller is configured to control, based on the first temperature value and the second temperature value or based on the second temperature value, the heating film to heat the electrochemical cell.

2. The battery pack according to claim 1, wherein the battery housing has an opening, the power module is located at the opening and forms a sealed cavity with the battery housing, and the electrochemical cell is located inside the sealed cavity.

3. The battery pack according to claim 2, wherein a ventilation valve is disposed on a surface that is of the battery housing and that is away from the power module.

4. The battery pack according to claim 3, wherein the ventilation valve has a unidirectional moisture-permeable film.

5. The battery pack according to claim 3 or 4, wherein a flux of the ventilation valve is greater than or equal to 500 L/min at atmospheric pressure of 7 kPa.

6. The battery pack according to any one of claims 1 to 5, wherein the heating film comprises a first heating element and a second heating element, the first heating element is fastened to a surface that is of the electrochemical cell and that is close to the power module, and the second heating element is fastened to a surface that is of the electrochemical cell and that is away from the power module.

7. The battery pack according to any one of claims 1 to 6, wherein the power module comprises a circuit board and a fan, and the fan is electrically connected to the controller and is configured to dehumidify the circuit board; and
the controller is further configured to control, based on the first temperature value and the second temperature value or based on the first temperature value, the fan to dehumidify the circuit board.

8. The battery pack according to claim 7, wherein the power module further comprises a heat sink fastened to the circuit board, and the heat sink is configured to dissipate heat for the circuit board;
the battery pack further comprises a third temperature sensor, and the third temperature sensor is electrically connected to the controller and is configured to detect temperature of the heat sink to obtain a third temperature value; and
the controller is further configured to control, based on the first temperature value and the third temperature value or based on the first temperature value, the second temperature value, and the third temperature value, the fan to dehumidify the circuit board.

9. The battery pack according to any one of claims 1 to 8, wherein the battery pack further comprises a first humidity sensor electrically connected to the controller, the first humidity sensor is configured to detect humidity of the power module to obtain a first humidity value, and the controller is further configured to control, based on the first humidity value, the fan to dehumidify the circuit board; and/or
the battery pack further comprises a second humidity sensor electrically connected to the controller, the second humidity sensor is configured to detect humidity of the electrochemical cell to obtain a second humidity value, and the controller is further configured to control, based on the second humidity value, the heating film to heat the electrochemical cell.

10. The battery pack according to any one of claims 1 to 9, wherein the battery pack further comprises a sealed enclosure, and the controller is disposed inside the sealed enclosure.

11. The battery pack according to claim 10, wherein the sealed enclosure is located inside the battery housing, or the sealed enclosure is located inside the power module.

12. An energy storage device, wherein the energy storage device comprises a plurality of battery packs according to any one of claims 1 to 11, and the plurality of battery packs are connected in series or in parallel to output electric energy to a bus.
